# EUROPÄISCHE PATENTSCHRIFT

(11) **EP 3 328 255 B1**
(45) Veröffentlichungstag und Bekanntmachung des Hinweises auf die Patenterteilung: **06.03.2019**
(21) Anmeldenummer: 16733997.7
(22) Anmeldetag: 04.07.2016
(51) Int. Cl.: A47L 9/28, A47L 11/40, G01N 21/01

(54) **GERÄT ZUR BEARBEITUNG EINER OBERFLÄCHE**
DEVICE FOR TREATING A SURFACE
APPAREIL DE TRAITEMENT D'UNE SURFACE

(30) Priorität: 27.07.2015 DE 102015112174
(43) Veröffentlichungstag der Anmeldung: 06.06.2018
(73) Patentinhaber: Vorwerk & Co. Interholding GmbH, 42275 Wuppertal (DE)
(72) Erfinder: HILLEN, Lorenz, 42287 Wuppertal (DE); BRANDT, Mara, 33615 Bielefeld (DE)
(74) Vertreter: Müller, Enno
(86) Internationale Anmeldenummer: PCT/EP2016/065693
(87) Internationale Veröffentlichungsnummer: WO 2017/016813

(56) Entgegenhaltungen:
- EP-A2- 2 515 196
- WO-A2-2007/028049
- DE-A1-102013 113 426
- US-B1- 8 719 998

## Beschreibung

### Gebiet der Technik

Die Erfindung betrifft ein Gerät zur Bearbeitung einer Oberfläche, insbesondere einen Reinigungsroboter, aufweisend eine Detektionseinrichtung zur Erkennung der Art der Oberfläche, welche Detektionseinrichtung eine Lichtquelle zur Bestrahlung der Oberfläche mit Licht und einen Sensor zur Detektion des von der Oberfläche reflektierten Lichtes aufweist.

### Stand der Technik

Geräte der vorgenannten Art sind im Stand der Technik hinreichend bekannt, so insbesondere in Form von selbsttätig verfahrbaren Reinigungsrobotern zur Reinigung und/oder Pflege von Fußböden beziehungsweise Bodenbelägen. Beispielsweise kann es sich um einen Staubsauger und/oder ein Feuchtwischgerät handeln.

Die Druckschrift DE 10 2013 113 426 A1 (auch veröffentlicht als US 2014/0166047 A1) betrifft beispielsweise ein Reinigungsgerät mit einer Einrichtung zur Erstellung fotografischer Aufnahmen einer zu befahrenden Fläche, wobei eine Aufnahme hinsichtlich der Art eines Bodenbelags auswertbar ist, und wobei ein erkannter Bodenbelag im Hinblick auf eine Verfahrstrategie des Reinigungsgerätes und/oder im Hinblick auf eine Einstellung von Reinigungsparametern wie Bodenabstand, Bürstendrehzahl oder ähnliches nutzbar ist.

Obwohl sich diese Reinigungsgeräte im Stand der Technik bewährt haben, ist dennoch eine stetige Fortbildung gewünscht.

### Zusammenfassung der Erfindung

Ausgehend von dem vorgenannten Stand der Technik ist es Aufgabe der Erfindung, ein Gerät mit einer Detektionseinrichtung zur Erkennung der Art der Oberfläche zu schaffen, bei welchem die Art der Oberfläche mit noch größerer Sicherheit erkannt werden kann.

Zur Lösung der vorgenannten Aufgabe schlägt die Erfindung vor, dass dem Sensor der Detektionseinrichtung eine dreidimensionale, mehrere Teilvolumina ausbildende Blendenkulisse zugeordnet ist, wobei jedes Teilvolumen jeweils einer anderen Sensorteilfläche des Sensors zugeordnet ist und wobei benachbarte Sensorteilflächen mittels der Blendenkulisse optisch so voneinander getrennt sind, dass ein Übertritt von Licht aus einem ersten Teilvolumen in ein zweites Teilvolumen verhindert ist.

Die Blendenkulisse dient somit als optische Blende, welche den Sensor in mehrere, beispielsweise vier, Sensorteilflächen unterteilt und gleichzeitig die einzelnen Sensorteilflächen optisch, d.h. lichttechnisch, voneinander trennt, so dass das von der Oberfläche reflektierte Licht innerhalb nur eines Teilvolumens der Blendenkulisse auf nur eine Sensorteilfläche des Sensors trifft. Dadurch ist es möglich, die Detektionseinrichtung bei gegenüber dem Stand der Technik erhöhter Messsicherheit mit nur einem einzigen Sensor auszubilden, da dieser mittels der Blendenkulisse in einzelne Sensorteilflächen unterteilt ist, die eine separate Auswertung des auf die jeweilige Sensorteilfläche treffenden Lichtes ermöglichen. Dadurch kann die Detektionseinrichtung besonders einfach und kostengünstig hergestellt werden. Zudem ist es nicht erforderlich, die Messdaten mehrerer Sensoren - gleichzeitig oder nacheinander - auszulesen, was Einfluss auf die Dauer eines Messzyklus hat. Während einer Messung wird die Blendenkulisse bevorzugt bodennah über der zu bearbeitenden Oberfläche angeordnet, so dass der Eintritt von Umgebungslicht in die Teilvolumina der Blendenkulisse minimiert ist und nur das von der Lichtquelle der Detektionseinrichtung an der Oberfläche reflektierte Licht zur Messung beiträgt, was schließlich die Zuverlässigkeit der Erkennung der Art der Oberfläche verbessert.

Des Weiteren wird vorgeschlagen, dass jedem Teilvolumen der Blendenkulisse eine eigene Lichtquelle zugeordnet ist. Durch die Anordnung jeweils einer eigenen Lichtquelle pro Teilvolumen der Blendenkulisse, insbesondere in jedem Teilvolumen, wird die zu bearbeitende Oberfläche in Bezug auf jedes Teilvolumen der Blendenkulisse separat beleuchtet. Darüber hinaus kann die Blendenkulisse unmittelbar auf die Oberfläche aufgesetzt werden, so dass Umgebungslicht nicht mehr von außen in die Blendenkulisse eintreten kann. Durch die Zuordnung einer eigenen Lichtquelle zu jedem Teilvolumen können die entsprechenden Teilflächen der Oberfläche auf gleiche oder unterschiedliche Art und Weise beleuchtet werden, so dass entweder eine gleichartige Beleuchtungssituation innerhalb der verschiedenen Teilvolumina entsteht oder nicht.

Alternativ wird vorgeschlagen, dass der Blendenkulisse eine gemeinsame Lichtquelle zugeordnet ist, wobei jedem Teilvolumen ein eigenes Lichtaustrittselement der Lichtquelle, insbesondere eine optische Faser, zugeordnet ist. Gemäß dieser Ausgestaltung muss nicht je eine eigene Lichtquelle pro Teilvolumen installiert sein. Vielmehr kann allen Teilvolumina eine gemeinsame Lichtquelle zugeordnet sein, deren emittiertes Licht mittels lichtleitender Elemente in die einzelnen Teilvolumina geführt wird. Vorteilhaft ist die Lichtquelle dabei außerhalb der Teilvolumina angeordnet, so dass dadurch kein Platzverlust entsteht. Beispielsweise kann die Lichtquelle außerhalb der Blendenkulisse, vorteilhaft auch an dem Gerätegehäuse des Bearbeitungsgerätes, angeordnet sein, wobei die Einkopplung des Lichtes in jedes einzelne Teilvolumen mittels eines lichtleitenden Elementes (optische Faser) erfolgt. Die lichtleitenden Elemente sind vorteilhaft optische Fasern, da diese besonders kostengünstig sind und flexibel an die räumlichen Gegebenheiten der Blendenkulisse beziehungsweise auch des Gerätegehäuses angepasst werden können. Gegenüber der Anordnung je einer eigenen Lichtquelle pro Teilvolumen der Blendenkulisse kann durch die gemeinsame Lichtquelle eine kostengünstige Herstellung der Detektionseinrichtung, und damit auch des Gerätes zur Bearbeitung der Oberfläche, erreicht werden.

Es wird vorgeschlagen, dass das Licht innerhalb des Teilvolumens einen bestimmten Beleuchtungsparameter zur Bestrahlung der Oberfläche aufweist, wobei die Beleuchtungsparameter innerhalb mindestens zweier Teilvolumina zueinander verschieden sind. Durch diese Ausgestaltung können die Teilflächen der beleuchteten Oberfläche auf unterschiedliche Art und Weise beleuchtet werden, so dass unterschiedliche Merkmale der Oberfläche detektiert werden können und somit die Messergebnisse der verschiedenen Teilvolumina beziehungsweise Sensorteilflächen zu einem insgesamt zuverlässigeren Messergebnis kombiniert werden können. Somit wird die zu messende Oberfläche nicht nur mit Licht eines einzigen Beleuchtungsparameters beleuchtet, sondern mit einer Vielzahl von unterschiedlichen Beleuchtungsparametern, beispielsweise bei vier Sensorteilflächen mit vier verschiedenen Beleuchtungsparametern. Durch diese Ausgestaltung kann eine Vielzahl unterschiedlicher Oberflächenarten mit noch größerer Genauigkeit unterschieden werden. Insbesondere ist es durch die unterschiedlichen Beleuchtungsparameter auch möglich, nicht nur Hartböden von Teppichboden zu unterscheiden, sondern vielmehr beispielsweise auch verschiedene Hartböden untereinander, so dass beispielsweise eine für jeden Hartbodentyp unterschiedliche Feuchtigkeitsmenge auf die Oberfläche aufgetragen wird, ohne die Oberfläche durch eine zu hohe Feuchtigkeit zu beschädigen. Durch die Verwendung unterschiedlicher Beleuchtungsparameter innerhalb der Beleuchtungskulisse treten innerhalb eines Teilvolumens mit einem ersten Beleuchtungsparameter Merkmale der Oberfläche hervor, welche beispielsweise innerhalb eines zweiten Teilvolumens mit einem zweiten Beleuchtungsparameter nicht sichtbar werden. Je nach der Art der Oberfläche kann somit eine bestimmte Art der Beleuchtung das Hervortreten eines Merkmals der Oberfläche erschweren oder vereinfachen. Durch die Beleuchtung der Oberfläche mit einer Vielzahl unterschiedlicher Beleuchtungsparameter wird somit eine Mehrzahl von zeitgleichen Messergebnissen erzeugt, welche in der besonderen Kombination einen noch zuverlässigeren Aufschluss auf die Art der Oberfläche zulassen. Durch die Beleuchtungskulisse wird somit die Messung mit verschiedenen Beleuchtungsparametern ermöglicht, ohne dass sich die Lichtanteile der einzelnen Teilvolumina gegenseitig beeinflussen. Jeder Lichtanteil ist dabei einer bestimmten Sensorteilfläche eines einzigen, gemeinsamen Sensors zugeordnet, was den apparativen Aufbau der Detektionseinrichtung deutlich reduziert. Im Falle gleichartiger Beleuchtungsparameter können die benachbarten Teilflächen der zu bearbeitenden Oberfläche beispielsweise unter gleichem Winkel zu der Lichtquelle und dem Sensor beleuchtet werden, so dass sich die Messergebnisse der Teilvolumina miteinander vergleichen lassen und gegebenenfalls Abweichungen der Teilflächen festgestellt werden können, um die Messung eines Artefakts, welcher nicht typisch für die zu bearbeitende Oberfläche ist, zu vermeiden.

Es wird vorgeschlagen, dass der Beleuchtungsparameter eine winkelabhängige Strahlstärke des Lichtes, ein Eintrittswinkel des Lichtes auf die bestrahlte Oberfläche, ein Winkel zwischen der Lichtquelle und dem Sensor und/oder zwischen dem Lichtaustrittsbereich und dem Sensor, ein Abstand der Lichtquelle und/oder des Lichtaustrittsbereiches zu der bestrahlten Oberfläche, ein Polarisationszustand des Lichtes und/oder eine Isotropie des Lichtes ist. Durch diese Beleuchtungsparameter wird die Oberfläche mittels der Lichtquelle beziehungsweise mittels des Lichtaustrittsbereiches der Lichtquelle innerhalb eines jeden Teilvolumens mit einem bestimmten Eintrittswinkel, einer bestimmten Wellenlänge, Polarisation, Isotropie oder Ähnliches bestrahlt. Unter der Isotropie des Lichtes ist eine abweichende Richtung der Strahlen eines Strahlbündels zu verstehen, wobei bei geringer Isotropie des Lichtes eine Parallelität der Strahlen eines Strahlbündels vorliegt. Bei vollständig isotropem Licht sind die Strahlen eines Strahlbündels dagegen nicht parallel zueinander. Die Isotropie des Lichtes kann beispielsweise durch eine Reflektion des von der Lichtquelle / dem Lichtaustrittsbereich emittierten Lichtes an einer rauen Oberfläche erreicht werden. Darüber hinaus kann zur Bereitstellung von unterschiedlichen Beleuchtungsparametern beispielsweise auch innerhalb eines ersten Teilvolumens eine punktförmige Lichtquelle verwendet werden, während in einem zweiten Teilvolumen eine flächige Lichtquelle verwendet wird. Darüber hinaus kann die Oberfläche direkt oder indirekt beleuchtet werden. Die Oberfläche kann senkrecht oder mit einem Winkel ungleich 90° beleuchtet werden. Darüber hinaus ist es auch möglich, die Oberfläche mit einem Streifenmuster zu beleuchten. Dies lässt sich beispielsweise dadurch erreichen, dass der Lichtquelle eine Schlitzblende zugeordnet ist. Weitere Beleuchtungsparameter sind denkbar.

Des Weiteren wird vorgeschlagen, dass dem Sensor eine Auswerteeinrichtung zugeordnet ist, welche eingerichtet ist, das mittels der Sensorteilfläche empfangene Licht in Bezug auf einen bestimmten Oberflächenparameter, insbesondere einen Glanz, eine Farbe und / oder eine Textur der Oberfläche, auszuwerten. Die Auswerteeinrichtung weist vorteilhaft einen Mikroprozessor und einen Speicher zur Speicherung von Messdaten sowie Referenzdaten bekannter Oberflächen auf. Die Auswerteeinrichtung kann entweder in der Detektionseinrichtung selbst oder an einem anderen Teilbereich des Gerätes zur Bearbeitung der Oberfläche angeordnet sein. Die Auswerteeinrichtung wertet das empfangene Licht in Bezug auf bestimmte Oberflächenparameter aus, so dass unterschiedliche Merkmale der zu erkennenden Oberfläche ausgewertet werden. Diese Merkmale können beispielsweise nur bei Hartböden in Erscheinung treten und/oder nur für Teppichböden relevant sein. Zur Bestimmung der Oberflächenparameter kann gegebenenfalls ein bestimmter Beleuchtungsparameter innerhalb des zugeordneten Teilvolumens notwendig sein. Beispielsweise ist zur Bestimmung der Farbe der Oberfläche eine Beleuchtung mit weißem Licht empfehlenswert. Darüber hinaus kann zur Erkennung einer mikroskopischen Struktur der Oberfläche auch die Verwendung von Licht einer bestimmten Wellenlänge notwendig sein.

Beispielsweise kann der Oberflächenparameter ein Glanz, eine Farbe und/oder eine Textur der Oberfläche sein. Innerhalb eines ersten Teilvolumens der Blendenkulisse kann somit beispielsweise das von der Sensorteilfläche empfangene Messsignal in Bezug auf einen Glanzpunkt, ein wellenlängenabhängiges Reflexionsmaximum, Reflexionsspektrum oder ähnliches ausgewertet werden, so dass auf die Art der Oberfläche geschlossen werden kann. Die Existenz eines Glanzpunktes weist beispielsweise auf einen Hartboden hin, da Teppichböden gewöhnlich keinen Glanzpunkt zeigen. Die Farbe kann alternativ oder zusätzlich ebenfalls auf eine bestimmte Oberflächenart schließen lassen. Des Weiteren ist auch die Textur der Oberfläche interessant, da beispielsweise Teppiche beziehungsweise Teppichböden eine andere Oberflächenstruktur zeigen als beispielsweise Hartböden.

Es wird vorgeschlagen, dass die ausgewerteten Oberflächenparameter mindestens zweier Sensorteilflächen zueinander verschieden sind. Somit wird in jedem der Teilvolumina der Beleuchtungskulisse ein anderer Oberflächenparameter bestimmt, so dass die Gesamtheit der ausgewerteten Oberflächenparameter innerhalb der gesamten Blendenkulisse zu einer insgesamt zuverlässigen Erkennung der Art der Oberfläche führen. Je mehr Teilvolumina beziehungsweise Sensorteilflächen die Detektionseinrichtung dabei aufweist, desto genauer kann die Art der Oberfläche erkannt werden.

Es wird vorgeschlagen, dass die Auswerteeinrichtung eingerichtet ist, die Oberflächenparameter mindestens zweier Sensorteilflächen logisch miteinander zu verknüpfen und zur Bestimmung der Art der Oberfläche mit Referenzdaten bekannter Oberflächen zu vergleichen. Durch die Kombination der Oberflächenparameter mehrerer Sensorteilflächen entsteht eine logische Kombination, welche charakteristisch für eine bestimmte Art einer Oberfläche ist. Die gemessene Kombination wird mittels der Auswerteeinrichtung mit Referenzdaten, welche in dem Datenspeicher hinterlegte Kombinationen von Oberflächenparametern beinhalten, verglichen. Somit kann die aktuell gemessene Oberfläche zuverlässig erkannt werden. Je größer die Anzahl der gemessenen Oberflächenparameter ist, desto zuverlässiger kann die Art der Oberfläche erkannt werden.

Des Weiteren ist vorgesehen, dass der Sensor ein Kamerachip, insbesondere ein CCD-Sensor oder ein CMOS-Sensor, ist. Die Sensorfläche des Kamerachips wird dabei abhängig von der Anordnung der einzelnen Teilvolumina ausgewertet, wobei beispielsweise bei vier Teilvolumina auch die Sensorfläche auf vier, vorteilhaft gleich große, Sensorteilflächen aufgeteilt wird. Jede Sensorteilfläche wird dabei von der Auswerteeinrichtung zusammenhängend ausgewertet und/oder ausgelesen, so dass der gemessen Oberflächenparameter eindeutig einem bestimmten Teilvolumen der Blendenkulisse zugeordnet werden kann.

Neben dem zuvor erläuterten Gerät zur Bearbeitung einer Oberfläche wird mit der Erfindung ebenfalls ein Verfahren zum Betrieb eines Gerätes, insbesondere eines zuvor beschriebenen Gerätes, vorgeschlagen, bei welchem die Oberfläche mit Licht bestrahlt wird und von der Oberfläche reflektiertes Licht zur Erkennung der Art der Oberfläche ausgewertet wird. Das erfindungsgemäße Verfahren beinhaltet, dass Licht in mehreren optisch getrennten Teilvolumina einer einem Sensor zugeordneten dreidimensionalen Blendenkulisse emittiert wird, auf die Oberfläche gestrahlt wird und von der Oberfläche auf eine dem jeweiligen Teilvolumen zugeordnete Sensorteilfläche des Sensors reflektiert wird, wobei sich ein Beleuchtungsparameter des innerhalb eines ersten Teilvolumens emittierten Lichtes von einem Beleuchtungsparameter des innerhalb eines zweiten Teilvolumens emittierten Lichtes unterscheidet, und wobei das von den Sensorteilflächen empfangene Licht hinsichtlich voneinander abweichender Oberflächenparameter der Oberfläche ausgewertet wird. Die Durchführung und die Merkmale des Verfahrens ergeben sich dabei analog zu den zuvor gemachten Erläuterungen in Bezug auf das Gerät zur Bearbeitung der Oberfläche.

### Kurze Beschreibung der Zeichnungen

Im Folgenden wird die Erfindung anhand von Ausführungsbeispielen näher erläutert. Es zeigen:
- Fig. 1: ein erfindungsgemäßes Gerät in einer perspektivischen Ansicht,
- Fig. 2: das Gerät in einer Seitenansicht,
- Fig. 3: eine Seitenansicht einer Detektionseinrichtung,
- Fig. 4: eine Unteransicht der Detektionseinrichtung,
- Fig. 5: ein erstes Teilvolumen der Blendenkulisse,
- Fig. 6: ein zweites Teilvolumen der Blendenkulisse,
- Fig. 7: ein drittes Teilvolumen der Blendenkulisse,

- Fig. 8: ein viertes Teilvolumen der Blendenkulisse,
- Fig. 9: ein von dem Sensor aufgenommenes Bild,
- Fig. 10: eine Tabelle mit Referenzdaten zur Auswertung.

### Beschreibung der Ausführungsformen

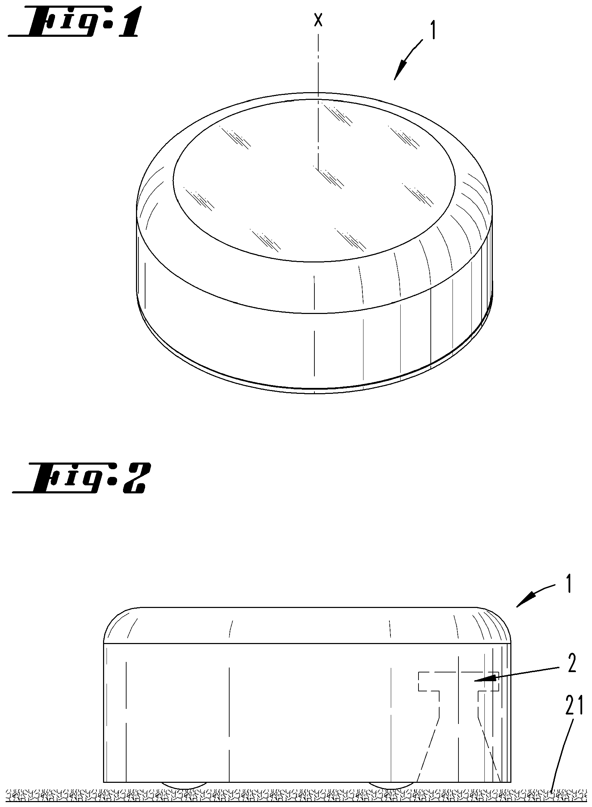

Figur 1 zeigt ein erfindungsgemäßes Gerät 1, welches hier als selbsttätig verfahrbarer Saugroboter ausgebildet ist. Das Gerät 1 verfügt über Verfahrräder sowie einen Elektromotor zum Antrieb der Verfahrräder. Darüber hinaus kann das Gerät 1 mit einer Navigationseinrichtung (nicht dargestellt) ausgestattet sein, welche die selbsttätige Orientierung des Gerätes 1 innerhalb eines Raumes ermöglicht. Diese beinhaltet üblicherweise eine Einrichtung zur Erkennung von Hindernissen und Raumsituationen.

Figur 2 zeigt das Gerät 1 in einer Seitenansicht, wobei gestrichelt eine in dem Gerät 1 verbaute Detektionseinrichtung 2 zur Erkennung der Art einer Oberfläche 21 dargestellt ist. Die Detektionseinrichtung 2 ist mit einer Detektionsseite auf die zu messende Oberfläche 21, hier beispielsweise ein Teppichboden, gerichtet.

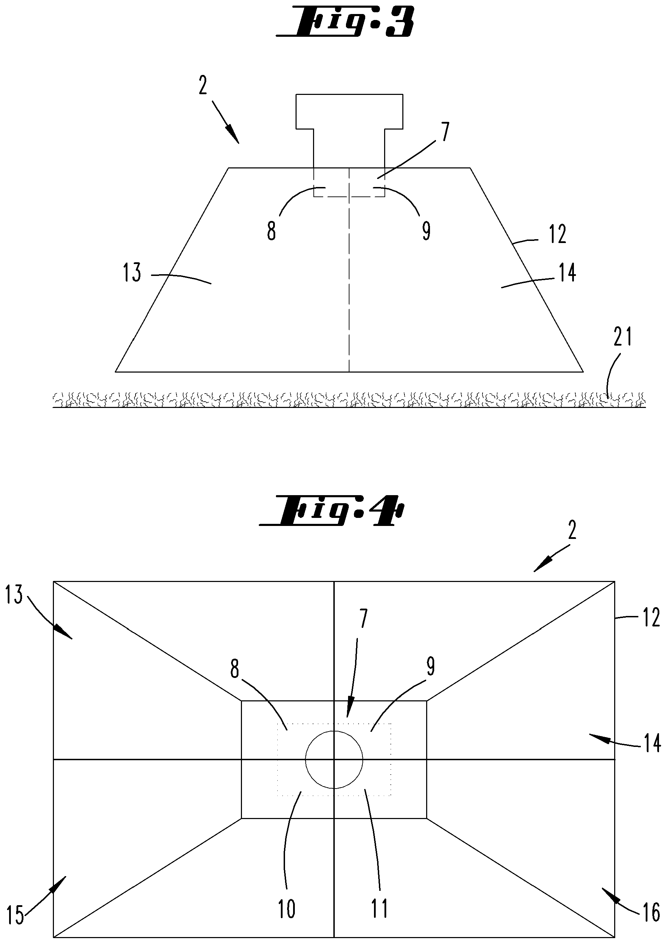

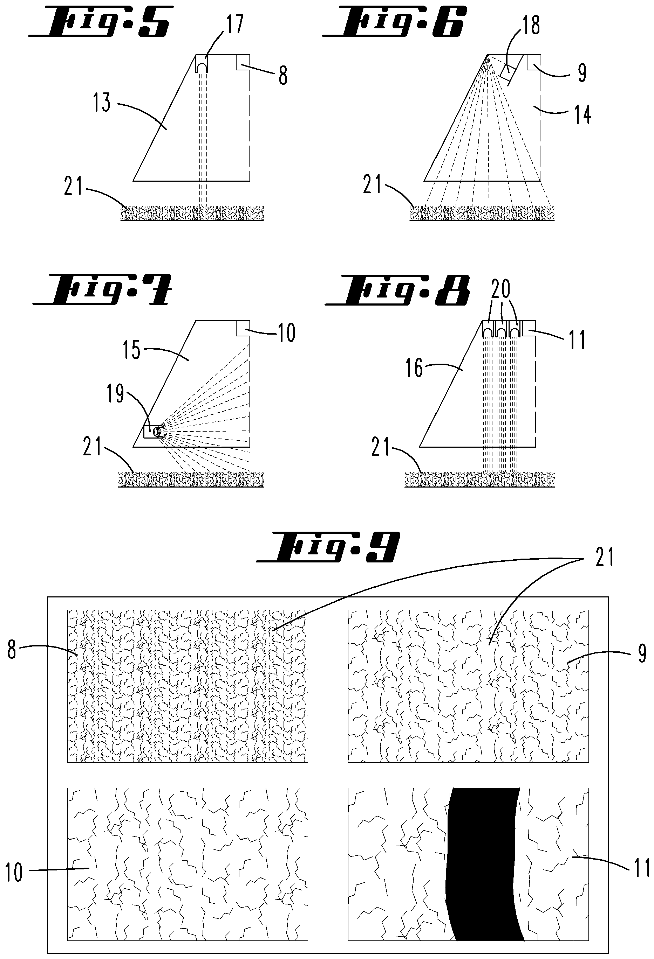

Figur 3 zeigt die Detektionseinrichtung 2 in einer schematischen Seitenansicht. Die Detektionseinrichtung 2 weist einen Sensor 7, hier eine Kamera mit einem Kamerachip (CCD-Chip), auf sowie eine dreidimensionale Blendenkulisse 12, die schirmartig ausgebildet ist und auf ihrer Oberseite den Sensor 7 trägt. Die Blendenkulisse 12 weist mehrere Teilvolumina 13, 14, 15, 16 auf, von welchen in der dargestellten Seitenansicht nur zwei Teilvolumina 13, 14 erkennbar sind. Jedem der Teilvolumen 13, 14, 15, 16 ist eine bestimmte Sensorteilfläche 8, 9, 10, 11 des Sensors 7 zugeordnet. Darüber hinaus ist in jedem Teilvolumen 13, 14, 15, 16 eine eigene Lichtquelle 17, 18, 19, 20 (siehe Figuren 5 bis 8) angeordnet. Die Blendenkulisse 12 ist so ausgebildet, dass die Teilvolumina 13, 14, 15, 16 durch Wandungen der Blendenkulisse 12 optisch so voneinander getrennt sind, dass zwischen den Teilvolumina 13, 14, 15, 16 kein Licht propagieren kann, d.h. in einem bestimmten Teilvolumen 13, 14, 15, 16 emittiertes Licht nicht in ein anderes Teilvolumen 13, 14, 15, 16 übertreten kann. Die Teilvolumina 13, 14, 15, 16 sind somit als lichttechnisch getrennte Bereiche der Blendenkulisse 12 zu verstehen, in welchen hier jeweils eine eigene Lichtquelle 17,18,19, 20 Licht emittiert, auf eine Teilfläche der zu erkennenden Oberfläche 21 strahlt, und wobei jedem Teilvolumen 13, 14, 15, 16 eine Sensorteilfläche 8, 9, 10, 11 des Sensors 7 zugeordnet ist, welche mit dem von der Oberfläche 21 reflektierten Licht bestrahlt wird.

Figur 4 zeigt die Detektionseinrichtung 2 von unten, d.h. aus Richtung der Oberfläche 21 in die Blendenkulisse 12 hinein gesehen. Zu erkennen sind die einzelnen Teilvolumina 13, 14, 15, 16 der Blendenkulisse 12, welchen jeweils eine Sensorteilfläche 8, 9, 10, 11 des Sensors 7 zugeordnet ist.

Die Figuren 5 bis 8 zeigen jeweils eines der Teilvolumina 13, 14, 15, 16 in einem vertikalen Schnitt. Das von der jeweiligen Lichtquelle 17, 18, 19, 20 emittierte Licht weist einen für das jeweilige Teilvolumen 13, 14, 15, 16 charakteristischen Beleuchtungsparameter zur Bestrahlung der Oberfläche 21 auf. Dadurch können innerhalb der Teilvolumina 13, 14, 15, 16 unterschiedliche Beleuchtungsbedingungen der Oberfläche 21 geschaffen werden und mit nur einem (allen Teilvolumina 13, 14, 15, 16 gemeinsamen) Sensor 7 detektiert werden. Durch die unterschiedlichen Beleuchtungsparameter treten auf der jeweiligen Sensorteilfläche 8, 9, 10, 11 verschiedene Oberflächenparameter zutage, welche für die aktuell gemessene Oberfläche 21 charakteristisch sind. Die von dem Sensor 7 insgesamt empfangenen Signale lassen sich logisch miteinander verknüpfen und zu einem Gesamtdatensatz verbinden, welcher Aufschluss über die Art der Oberfläche 21 gibt.

Figur 5 zeigt ein erstes Teilvolumen 13 der Blendenkulisse 12, in welchem eine erste Lichtquelle 17 und eine erste Sensorteilfläche 8 angeordnet sind. Die Lichtquelle 17 ist so innerhalb des Teilvolumens 13 angeordnet, dass diese die zu erkennende Oberfläche 21 senkrecht bestrahlt. Dabei bestrahlt die Lichtquelle 17 nur einen begrenzten Teilbereich der Oberfläche 21, der relativ zu der Austrittsfläche des Teilvolumens 13 der Blendenkulisse 12 nur einen geringen Flächenanteil aufweist. Je nach der Art der Oberfläche 21 kann ein bestimmter Anteil des Lichtes von der Oberfläche 21 zu der Sensorteilfläche 8 gelangen. Sofern es sich bei der Oberfläche 21 beispielsweise um einen Teppichboden handelt, wird das Licht an der Oberfläche 21 gestreut, so dass ein diffuser Lichtanteil auf die Sensorteilfläche 8 trifft. Sofern es sich dem gegenüber um einen Hartboden handelt, reflektiert die senkrecht bestrahlte Oberfläche 21 das Licht im Wesentlichen senkrecht zurück, so dass nur ein relativ geringer Lichtanteil auf die Sensorteilfläche 8 trifft. Dadurch können anhand des sogenannten "Glanzpunktes" Hartböden von Teppichböden unterschieden werden.

Figur 6 zeigt ein zweites Teilvolumen 14, in welchem eine zweite Lichtquelle 18 sowie eine zweite Sensorteilfläche 9 angeordnet sind. Die Lichtquelle 18 ist so innerhalb des Teilvolumens 14 angeordnet, dass die Oberfläche 21 nicht direkt bestrahlt wird. Vielmehr ist die Lichtquelle 18 auf einen Eckbereich des Teilvolumens 14 gerichtet, so dass die von der Lichtquelle 18 emittierte Strahlung von der Innenwandung der Blendenkulisse 12 reflektiert wird und die Oberfläche 21 diffus und indirekt beleuchtet. Zudem wird das von der Lichtquelle 18 emittierte Licht an dem Eckbereich aufgeweitet, so dass die auf die Oberfläche 21 treffende Strahlung innerhalb eines aufgeweiteten Lichtkegels aus unterschiedlichen Winkeln auf die Oberfläche 21 trifft. Die diffuse Bestrahlung von unterschiedlichen Oberflächen 21, wie beispielsweise Hartböden und Teppichböden oder auch verschiedenen Hartböden und/oder Teppichböden untereinander, ruft wiederum unterschiedliche Reflexionssignale hervor, so dass anhand des von der Sensorteilfläche 9 empfangenen Lichtes ein Rückschluss auf die Art der Oberfläche 21 möglich ist. Hier dient die Anordnung innerhalb des Teilvolumens 14 zur Erkennung eines holztypischen Farbtons, d.h. zur Erkennung des Oberflächenparameters "Farbe", und zur Erkennung der Textur der Oberfläche 21. Sofern die Textur beispielsweise eine Vorzugsrichtung aufweist, kann mit großer Wahrscheinlichkeit ausgeschlossen werden, dass es sich bei der Oberfläche 21 um einen Teppichboden oder einen PVC-Belag handelt. Vielmehr kommt als Oberfläche 21 ein Holzboden in Frage, welcher eine Maserung aufweist.

Figur 7 zeigt ein drittes Teilvolumen 15 mit einer dritten Lichtquelle 19 und einer dritten Sensorteilfläche 10. Die Lichtquelle 19 ist mit der optischen Achse im Wesentlichen parallel zu der Oberfläche 21 ausgerichtet, wobei das emittierte Licht aufgrund des kegelförmig aufgeweiteten Lichtbündels teilweise direkt in einem schrägen Winkel auf die Oberfläche 21 trifft und zu einem anderen Teil an einer Wandung der Blendenkulisse 12 reflektiert wird gegebenenfalls diffus aus auf die Oberfläche 21 trifft. Die Sensorteilfläche 10 empfängt das von der Oberfläche 21 reflektierte Licht, welches hier beispielsweise im Hinblick auf den Oberflächenparameter "Anteil schwarzer Pixel" untersucht wird. Sofern das von der Sensorteilfläche 10 empfangene Lichtsignal einen besonders hohen Anteil schwarzer Pixel aufweist, kann auf einen Teppichboden geschlossen werden. Sofern der Anteil schwarzer Pixel gering ist, kommt hingegen ein Holz oder PVC als Oberfläche 21 in Frage.

Figur 8 zeigt das vierte Teilvolumen 16 der Blendenkulisse 12, in welchem drei Lichtquellen 20 sowie eine Sensorteilfläche 11 angeordnet sind. Die Lichtquellen 20 sind parallel zueinander angeordnet, so dass die emittierten Lichtanteile im Wesentlichen parallel zueinander verlaufen und das Licht streifenförmig auf die Oberfläche 21 trifft. Dadurch entsteht ein Streifenmuster auf der zu erkennenden Oberfläche 21, dessen Hell-/Dunkel-Übergänge einen Rückschluss auf die Art der Oberfläche 21 zulassen. Sofern es sich bei der Oberfläche 21 beispielsweise um einen Teppichboden handelt, weisen die Übergänge eine unregelmäßige Struktur auf. Je glatter die Oberfläche 21 hingegen ist, desto schärfer sind auch die Hell-/Dunkel-Übergänge, beispielsweise im Falle von PVC oder insbesondere Holz.

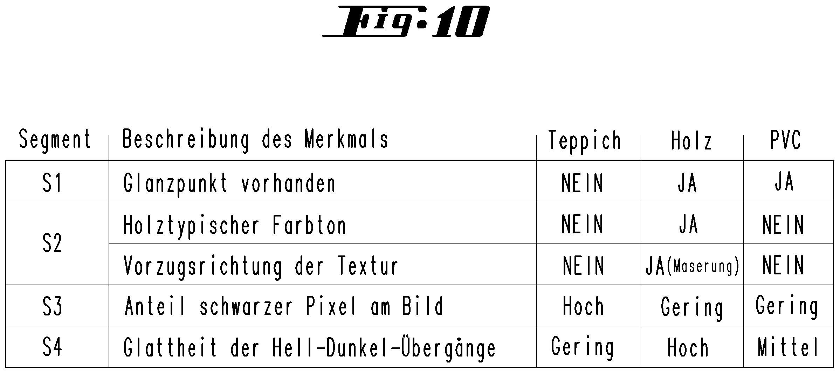

Figur 9 zeigt die von dem Sensor 7 insgesamt detektierten Lichtsignale in Form eines Kamerabildes. Dieses ist im Hinblick auf die einzelnen Sensorteilflächen 8, 9, 10, 11 getrennt. Jedes Sensorteilflächensignal gibt dabei aufgrund der unterschiedlichen Beleuchtungsparameter innerhalb der Teilvolumina 13, 14,15,16 einen anderen Oberflächenparameter wieder. Hier sind die entsprechenden Signale der Sensorteilflächen 8, 9, 10, 11 dargestellt. Das der Sensorteilfläche 8 zugeordnete Bild dient zur Ermittlung des Glanzpunktes, das der Sensorteilfläche 9 zugeordnete Bild zur Ermittlung der Textur, das der Sensorteilfläche 10 zugeordnete Bild der Ermittlung des Anteils der schwarzen Pixel am Bild und das der Sensorteilfläche 11 zugeordnete Bild dient der Beurteilung der Hell-/Dunkel-Übergänge. Hier ist beispielsweise zu erkennen, dass die Oberfläche 21 keinen Glanzpunkt zeigt, keine Vorzugsrichtung der Textur aufweist, einen hohen Anteil von schwarzen Pixeln aufweist und die Hell-/Dunkel-Übergänge keine geraden Linien sind. Diese Oberflächenparameter werden logisch zu einem Gesamtdatensatz miteinander verknüpft und zur Bestimmung der Art der Oberfläche 21 mit Referenzdaten bekannter Oberflächen 21 verglichen, welche innerhalb eines Datenspeichers einer Auswerteeinrichtung gespeichert sind. Sofern der aktuell gemessene Datensatz mit einem abgespeicherten Datensatz übereinstimmt, kann die Art der Oberfläche 21 zuverlässig festgestellt werden. Die in dem Datenspeicher hinterlegten Referenzdaten können als Tabelle hinterlegt sein. Im zuvor dargestellten Fall sieht eine Tabelle beispielsweise wie in Figur 10 dargestellt aus.

Das Verfahren zur Erkennung der Art der Oberfläche 21 wird vorteilhaft während einer Fahrt des Gerätes 1 über die Oberfläche 21 durchgeführt. Dabei ist der Sensor 7 kontinuierlich in Betrieb. In Bezug auf jedes Teilvolumen 13, 14, 15, 16 wird ein bestimmter Oberflächenparameter extrahiert. Die Oberflächenparameter werden logisch miteinander verknüpft und zur Erkennung der Oberfläche 21 herangezogen.

Für die Auswertung werden in der Regel Verfahren des überwachten Lernens eingesetzt. Diese Verfahren beinhalten beispielsweise eine Trainingsphase, bei welcher der Auswerteeinrichtung eine Vielzahl verschiedener Oberflächen 21 gezeigt wird. Die jeweiligen Oberflächen 21 sind bekannt und werden mit ihren zugehörigen Oberflächenparametern innerhalb des Datenspeichers gespeichert. Dabei ist es ebenfalls möglich, dass nicht nur bekannte Oberflächenparameter erkannt werden können, sondern auch abweichende ähnliche Oberflächenparameter, welche die Auswerteeinrichtung automatisch zuordnen kann. Somit können auch unterschiedliche Typen einer Oberfläche 21 erkannt werden, deren Oberflächenparameter nicht identisch, aber ähnlich sind, so dass die Auswerteeinrichtung diese einer bestimmten Art der Oberfläche 21 zuordnen kann.

Anhand der Kenntnis der Art der aktuell gemessenen Oberfläche 21 kann dann die weitere Bearbeitung der Oberfläche 21 mittels des Gerätes 1 gesteuert werden. Falls es sich bei der erkannten Oberfläche 21 um einen Teppichboden handelt, wird das Gerät 1 beispielsweise eine Befeuchtung der Oberfläche 21 vermeiden und einen Reinigungsvorgang beispielsweise auf ein Absaugen und/oder Bürsten beschränken.

### Liste der Bezugszeichen

- 1: Gerät
- 2: Detektionseinrichtung
- 3: Lichtquelle
- 4: Lichtquelle
- 5: Lichtquelle
- 6: Lichtquelle
- 7: Sensor
- 8: Sensorteilfläche
- 9: Sensorteilfläche
- 10: Sensorteilfläche
- 11: Sensorteilfläche
- 12: Blendenkulisse
- 13: Teilvolumen
- 14: Teilvolumen
- 15: Teilvolumen
- 16: Teilvolumen
- 17: Lichtquelle
- 18: Lichtquelle
- 19: Lichtquelle
- 20: Lichtquelle
- 21: Oberfläche

## Patentansprüche

1. Gerät (1) zur Bearbeitung einer Oberfläche (21), insbesondere Reinigungsroboter, aufweisend eine Detektionseinrichtung (2) zur Erkennung der Art der Oberfläche (21), welche Detektionseinrichtung (2) eine Lichtquelle (3, 4, 5, 6) zur Bestrahlung der Oberfläche (21) mit Licht und einen Sensor (7) zur Detektion des von der Oberfläche (21) reflektierten Lichtes aufweist, **dadurch gekennzeichnet, dass** dem Sensor (7) eine dreidimensionale, mehrere Teilvolumina (13, 14, 15, 16) ausbildende Blendenkulisse (12) zugeordnet ist, wobei jedes Teilvolumen (13, 14, 15, 16) jeweils einer anderen Sensorteilfläche (8, 9, 10, 11) des Sensors (7) zugeordnet ist und wobei benachbarte Sensorteilflächen (8, 9, 10, 11) mittels der Blendenkulisse (12) optisch so voneinander getrennt sind, dass ein Übertritt von Licht aus einem ersten Teilvolumen (13, 14, 15, 16) in ein zweites Teilvolumen (13, 14, 15, 16) verhindert ist.

2. Gerät (1) nach Anspruch 1, **dadurch gekennzeichnet, dass** jedem Teilvolumen (13, 14, 15, 16) der Blendenkulisse (12) eine eigene Lichtquelle (17, 18, 19, 20) zugeordnet ist.

3. Gerät (1) nach Anspruch 1, **dadurch gekennzeichnet, dass** der Blendenkulisse eine gemeinsame Lichtquelle (17,18, 19, 20) zugeordnet ist, wobei jedem Teilvolumen (13, 14, 15, 16) ein eigenes Lichtaustrittselement der Lichtquelle (17, 18, 19, 20), insbesondere eine optische Faser, zugeordnet ist.

4. Gerät (1) nach einem der vorhergehenden Ansprüche, **dadurch gekennzeichnet, dass** das Licht innerhalb des Teilvolumens (13, 14, 15, 16) einen bestimmten Beleuchtungsparameter zur Bestrahlung der Oberfläche (21) aufweist, wobei die Beleuchtungsparameter innerhalb mindestens zweier Teilvolumina (13, 14, 15, 16) zueinander verschieden sind.

5. Gerät (1) nach Anspruch 4, **dadurch gekennzeichnet, dass** der Beleuchtungsparameter eine winkelabhängige Strahlstärke des Lichtes, ein Eintrittswinkel des Lichtes auf die bestrahlte Oberfläche (21), ein Winkel zwischen der Lichtquelle (3, 4, 5, 6) und dem Sensor (7) und/oder zwischen dem Lichtaustrittsbereich und dem Sensor (7), ein Abstand der Lichtquelle (3, 4, 5, 6) und/oder des Lichtaustrittsbereiches zu der bestrahlten Oberfläche (21), ein Polarisationszustand des Lichtes und/oder eine Isotropie des Lichtes ist.

6. Gerät (1) nach einem der vorhergehenden Ansprüche, **dadurch gekennzeichnet, dass** dem Sensor (7) eine Auswerteeinrichtung zugeordnet ist, welche eingerichtet ist, das mittels der Sensorteilfläche (8, 9, 10, 11) empfangene Licht in Bezug auf einen bestimmten Oberflächenparameter, insbesondere einen Glanz, eine Farbe und/oder eine Textur der Oberfläche (21), auszuwerten.

7. Gerät (1) nach Anspruch 6, **dadurch gekennzeichnet, dass** die ausgewerteten Oberflächenparameter mindestens zweier Sensorteilflächen (8, 9, 10, 11) zueinander verschieden sind.

8. Gerät (1) nach Anspruch 6 oder 7, **dadurch gekennzeichnet, dass** die Auswerteeinrichtung eingerichtet ist, die Oberflächenparameter mindestens zweier Sensorteilflächen (8, 9, 10, 11) logisch miteinander zu verknüpfen und zur Bestimmung der Art der Oberfläche (21) mit Referenzdaten bekannter Oberflächen (21) zu vergleichen.

9. Gerät (1) nach einem der vorhergehenden Ansprüche, **dadurch gekennzeichnet, dass** der Sensor (7) ein Kamerachip, insbesondere CCD-Sensor oder CMOS-Sensor, ist.

10. Verfahren zum Betrieb eines Gerätes (1) zur Bearbeitung einer Oberfläche (21), insbesondere zum Betrieb eines Gerätes (1) nach einem der Ansprüche 1 bis 9, wobei die Oberfläche (21) mit Licht bestrahlt wird und von der Oberfläche (21) reflektiertes Licht zur Erkennung der Art der Oberfläche (21) ausgewertet wird, **dadurch gekennzeichnet, dass** Licht in mehreren optisch getrennten Teilvolumina (13, 14, 15, 16) einer einem Sensor (7) zugeordneten dreidimensionalen Blendenkulisse (12) emittiert wird, auf die Oberfläche (21) gestrahlt wird und von der Oberfläche (21) auf eine dem jeweiligen Teilvolumen (13, 14, 15, 16) zugeordnete Sensorteilfläche (8, 9, 10, 11) des Sensors (7) reflektiert wird, wobei sich ein Beleuchtungsparameter des innerhalb eines ersten Teilvolumens (13, 14, 15, 16) emittierten Lichtes von einem Beleuchtungsparameter des innerhalb eines zweiten Teilvolumens (13, 14, 15, 16) emittierten Lichtes unterscheidet, und wobei das von den Sensorteilflächen (8, 9, 10, 11) empfangene Licht hinsichtlich voneinander abweichender Oberflächenparameter der Oberfläche (21) ausgewertet wird.

## Claims

1. A device (1) for treating a surface (21), in particular to a cleaning robot, having a detection device (2) for identifying the type of surface (21), which detection device (2) has a light source (3, 4, 5, 6) for irradiating the surface (21) with light and a sensor (7) for detecting the light, which is reflected by the surface (21), **characterized in that** a three-dimensional screen panel (12), which forms a plurality of partial volumes (13, 14, 15, 16), is associated with the sensor (7), wherein each partial volume (13, 14, 15, 16) is in each case associated with a different sensor subarea (8, 9, 10, 11) of the sensor (7), and wherein adjacent sensor subareas (8, 9, 10, 11) are optically separated from one another by means of the screen panel (12) such that light is prevented from passing from a first partial volume (13, 14, 15, 16) to a second partial volume (13, 14, 15, 16).

2. The device (1) according to claim 1, characterized that a separate light source (17, 18, 19, 20) is associated with each partial volume (13, 14, 15, 16) of the screen panel (12).

3. The device (1) according to claim 1, **characterized in that** a common light source (17, 18, 19, 20) is associated with the screen panel, wherein a separate light exit element of the light source (17, 18, 19, 20), in particular an optical fiber, is associated with each partial volume (13, 14, 15, 16).

4. The device (1) according to one of the preceding claims, **characterized in that** the light within the partial volume (13, 14, 15, 16) has a certain illuminating parameter for irradiating the surface (21), wherein the illuminating parameters within at least two partial volumes (13, 14, 15, 16) differ from one another.

5. The device (1) according to claim 4, **characterized in that** the illuminating parameter is an angle-dependent radiant intensity of the light, an entry angle of the light onto the irradiated surface (21), an angle between the light source (3, 4, 5, 6) and the sensor (7) and/or between the light exit area and the sensor (7), a distance of the light source (3, 4, 5, 6) and/or of the light exit area to the irradiated surface (21), a polarization state of the light and/or an isotropy of the light.

6. The device (1) according to one of the preceding claims, **characterized in that** an evaluation device, which is equipped to evaluate the light received by means of the sensor subarea (8, 9, 10, 11), with regard to a certain surface parameter, in particular a gloss, a color and/or a texture of the surface (21), is associated with the sensor (7).

7. The device (1) according to claim 6, **characterized in that** the evaluated surface parameters of at least two sensor subareas (8, 9, 10, 11) are different from one another.

8. The device (1) according to claim 6 or 7, **characterized in that** the evaluation device is equipped to logically link the surface parameters of at least two sensor subareas (8, 9, 10, 11) to one another and to compare them to reference data of known surfaces (21) in order to determine the type of surface (21).

9. The device (1) according to one of the preceding claims, **characterized in that** the sensor (7) is a camera chip, in particular a CCD sensor or a CMOS sensor.

10. A method for operating a device (1) for treating a surface (21), in particular for operating a device (1) according to one of claims 1 to 9, wherein the surface (21) is irradiated with light, and light reflected from the surface (21) is evaluated to identify the type of surface (21), **characterized in that** light is determined in a plurality of optically separated partial volumes (13, 14, 15, 16) of a three-dimensional screen panel (12) associated with a sensor (7), is irradiated onto the surface (21), and is reflected from the surface (21) onto a sensor subarea (8, 9, 10, 11) of the sensor (7), which is associated with the respective partial volume (13, 14, 15, 16), wherein an illuminating parameter of the light emitted within a first partial volume (13, 14, 15, 16) differs from an illuminating parameter of the light emitted within a second partial volume (13, 14, 15, 16), and wherein the light received by the sensor subareas (8, 9, 10, 11) is evaluated with regard to surface parameters of the surface (21), which differ from one another.

## Revendications

1. Appareil (1) pour traiter une surface (21), en particulier robot de nettoyage, comprenant un dispositif de détection (2) pour identifier le type de surface (21), le dispositif de détection (2) comprenant une source lumineuse (3, 4, 5, 6) pour irradier de lumière la surface (21) et un capteur (7) pour détecter une lumière réfléchie par la surface (21), **caractérisé en ce qu'**est associé au capteur (3) un diaphragme (12) en trois dimensions formant une pluralité de volumes partiels (13, 14, 15, 16), dans lequel chaque volume partiel (13, 14, 15, 16) est associé respectivement à une surface partielle de capteur différente (8, 9, 10, 11) du capteur (7) et dans lequel des surfaces partielles de capteur adjacentes (8, 9, 10, 11) sont séparées optiquement l'une de l'autre ou les unes des autres au moyen du diaphragme (12) de manière à empêcher un transfert de lumière d'un premier volume partiel (13, 14, 15, 16) à un deuxième volume partiel (13, 14, 15, 16).

2. Appareil (1) selon la revendication 1, **caractérisé en ce qu'**à chaque volume partiel (13, 14, 15, 16) du diaphragme (12) est associée sa propre source lumineuse (17, 18, 19, 20).

3. Appareil (1) selon la revendication 1, **caractérisé en ce qu'**une source lumineuse commune (17, 18, 19, 20) est associée au diaphragme (12), un élément propre de sortie de lumière de la source lumineuse (17, 18, 19, 19, 20), en particulier une fibre optique, étant associé à chaque volume partiel (13, 14, 15, 16).

4. Appareil (1) selon l'une des revendications précédentes, **caractérisé en ce que** la lumière à l'intérieur du volume partiel (13, 14, 15, 16) comprend un paramètre d'éclairage spécifique pour irradier la surface (21), les paramètres d'éclairage dans au moins deux volumes partiels (13, 14, 15, 16) étant différents entre eux.

5. Appareil (1) selon la revendication 4, **caractérisé en ce que** le paramètre d'éclairage est une intensité de faisceau de lumière dépendant de l'angle, un angle d'entrée de la lumière sur la surface irradiée (21), un angle entre la source lumineuse (3, 4, 5, 6) et le capteur (7) et/ou entre la zone de sortie de lumière et le capteur (7), une distance de la source lumineuse (3, 4, 5, 6) et/ou de la zone de sortie de lumière à la surface irradiée (21), un état de polarisation de la lumière et/ou une isotropie de la lumière.

6. Appareil (1) selon l'une des revendications précédentes, **caractérisé en ce qu'**un dispositif d'évaluation est associé au capteur (7), le dispositif d'évaluation étant conçu pour évaluer la lumière reçue au moyen de la surface partielle de capteur (8, 9, 10, 11) par rapport à un paramètre de surface spécifique, en particulier un brillant, une couleur et/ou une texture de la surface (21).

7. Appareil (1) selon la revendication 6, **caractérisé en ce que** les paramètres de surface évalués d'au moins deux surfaces partielles de capteurs (8, 9, 10, 11) sont différents l'un de l'autre.

8. Appareil (1) selon la revendication 6 ou 7, caractérisé en ce le dispositif d'évaluation est conçu pour relier logiquement les paramètres de surface d'au moins deux surfaces partielles de capteur (8, 9, 10, 11) et pour comparer avec des données de référence de surfaces connues (21) afin de déterminer le type de surface (21).

9. Appareil (1) selon l'une des revendications précédentes, **caractérisé en ce que** le capteur (7) est une puce de caméra, en particulier un capteur CCD ou un capteur CMOS.

10. Procédé de fonctionnement d'un appareil (1) pour le traitement d'une surface (21), en particulier pour l'exploitation d'un appareil (1) selon l'une des revendications 1 à 9, dans lequel la surface (21) est irradiée de lumière et la lumière réfléchie par la surface (21) est évaluée pour identifier le type de surface (21), **caractérisé en ce que** de la lumière est émise dans plusieurs volumes partiels (13, 14, 15, 16), séparés optiquement, d'un diaphragme (12) en trois dimensions associé à un capteur (7), est irradiée sur la surface (21) et est réfléchie par la surface (21) sur une surface partielle de capteur (8, 9, 10, 11) du capteur (7) associée à un volume partiel respectif (13, 14, 15, 16), dans lequel un paramètre d'éclairage de la lumière émise dans un premier volume partiel (13, 14, 15 , 16) se différencie d'un paramètre d'éclairage de la lumière émise dans un deuxième volume partiel (13, 14, 15, 16), et dans lequel la lumière reçue par les surfaces partielles de capteur (8, 9, 10, 11) est évaluée eu égard à des paramètres de surface de la surface (21) qui diffèrent les uns des autres.
